# EUROPÄISCHE PATENTANMELDUNG

(11) **EP 2 172 714 A2**
(43) Veröffentlichungstag der Anmeldung: **07.04.2010**
(21) Anmeldenummer: 09401020.4
(22) Anmeldetag: 25.09.2009
(51) Int. Cl.: F24F 11/00

(54) **Verfahren zur Beheizung und Beheizungsanordnung mit Belüftungsanlage und Verbrennungsofen**

(30) Priorität: 01.10.2008 DE 202008008855 U
(71) Anmelder: Mertens- Kachelöfen und Fliesen GmbH, 21423 Winsen/Luhe (DE); Clama Holding GmbH, 53343 Wachtberg (DE)
(72) Erfinder: Mertens, Walter, 21423 Winsen/Luhe (DE); Ruland, Harald, 65520 Bad Camberg (DE)
(74) Vertreter: Hansen, Jochen

(57) **Zusammenfassung**

Die Erfindung betrifft ein Verfahren zur Beheizung, insbesondere für Wohnräume (W, S, K), mit kontrollierter Belüftung mit Wärmerückgewinnung, wobei Abluft (A) aus den Wohnräumen (W, S, K) einen Teil ihrer Wärme an im Gegenstrom zufließender Frischluft (Fr) abgibt und diese erwärmte Frischluft als Zuluft (Z) in die Wohnräume (W, S, K) führt, und einem Verbrennungsofen (2), wobei am Verbrennungsofen (2) im wärmeaufnehmenden Kontakt entlanggeführte Luft so geführt wird, dass sie der Abluft (A) der kontrollierten Wohnraumbelüftung zugeschlagen wird und somit die in der vom Verbrennungsofen (2) erwärmten Luft aufgenommene Wärme auf die im Gegenstrom zufließende Frischluft (Fr) als stärker erwärmte Zuluft (Z) übertragen wird.

Ferner betrifft die Erfindung eine Beheizungsanordnung, insbesondere für Wohnräume (W, S, K), mit kontrollierter Belüftungsanlage (1) mit Wärmerückgewinnung, bei der Abluftkanäle (11) Abluft (A) aus den Räumen (K) über einen Luft/Luft-Wärmetauscher (10) als Fortluft (Fo) nach außen abgeben und im Gegenstrom Frischluft (Fr) über den Luft/Luft-Wärmetauscher (10) als von der Wärme der Abluft (A) erwärmte Zuluft (Z) über Zuluftkanäle (12) in die Räume (R) führt, und mit Verbrennungsofen (2), insbesondere für Festbrennstoffe, wobei ein gesonderter Luftkanal (3) in Wärme aufnehmendem Kontakt am Verbrennungsofen (2) vorgesehen ist, dessen stromabwärtiges Ende (32) an einem Abluftkanal (11) der Belüftungsanlage (1) angeschlossen ist und dessen stromaufwärtiges Ende (31) zum Raum (R) offen ist.

## Beschreibung

Die Erfindung betrifft ein Verfahren zur Beheizung, insbesondere für Wohnräume, mit kontrollierter Belüftung mit Wärmerückgewinnung, wobei Abluft aus den Wohnräumen einen Teil ihrer Wärme an im Gegenstrom zufließender Frischluft abgibt und diese erwärmte Frischluft als Zuluft in die Wohnräume führt, und einem Verbrennungsofen. Ferner betrifft die Erfindung eine Beheizungsanordnung, insbesondere für Wohnräume, mit kontrollierter Belüftungsanlage mit Wärmerückgewinnung, bei der Abluftkanäle Abluft aus den Räumen über einen Luft/Luft-Wärmetauscher als Fortluft nach außen abgeben und im Gegenstrom Frischluft über den Luft/Luft-Wärmetauscher als von der Wärme der Abluft erwärmte Zuluft über Zuluftkanäle in die Räume führt, und mit Verbrennungsofen, insbesondere für Festbrennstoffe.

Derartige Verfahren bzw. Anordnungen befinden sich in einer Vielzahl von Wohnhäusern, insbesondere moderne Wohnhäuser werden mit einer kontrollierten Belüftungsanlage mit Wärmerückgewinnung konzipiert. Andererseits wollen viele Bauherren nicht auf die wohlige Wärme eines Verbrennungsofens verzichten. Entsprechend existieren kontrollierte Belüftungsanlagen mit Wärmerückgewinnung und Verbrennungsofen unabhängig voneinander in Wohngebäuden. Um überhaupt einen Verbrennungsofen in einem Gebäude mit kontrollierter Belüftungsanlage betreiben zu können, muss dieser raumluftunabhängig sein, damit der durch die Belüftungsanlage gegebenenfalls bewirkte geringfügige Unterdruck in den Wohnräumen nicht dazu führt, dass Verbrennungsgase aus dem Verbrennungsofen in die Wohnräume gezogen wird. Wird diese Elementarvorgabe nicht eingehalten, ist ein problemloser unabhängiger Betrieb beider Komponenten, Belüftungsanlage und Verbrennungsofen in einem Wohngebäude nicht gewährleistet. Entsprechend können sich die beiden genannten Komponenten negativ beeinflussen. Eine positive Beeinflussung der beiden Komponenten wurde bisher nicht erreicht.

Aufgabe der Erfindung ist es, einen Verbrennungsofen so mit einer Belüftungsanlage zu kombinieren, dass die in einem Verbrennungsofen erzeugte Wärme optimal verteilt wird.

Gelöst wird diese Aufgabe bei einem eingangs genannten Beheizungsverfahren dadurch, dass am Verbrennungsofen im wärmeaufnehmenden Kontakt entlanggeführte Luft so geführt wird, dass sie der Abluft der kontrollierten Wohnraumbelüftung zugeschlagen wird und somit die in der vom Verbrennungsofen erwärmten Luft aufgenommene Wärme auf die im Gegenstrom zufließende Frischluft als stärker erwärmte Zuluft übertragen wird. Ferner wird die Aufgabe bei einer eingangs genannten Beheizungsanordnung dadurch gelöst, dass ein gesonderter Luftkanal in Wärme aufnehmendem Kontakt am Verbrennungsofen vorgesehen ist, dessen stromabwärtiges Ende an einem Abluftkanal der Belüftungsanlage angeschlossen ist und dessen stromaufwärtiges Ende zum Raum offen ist. Mit dieser Ausgestaltung wird erreicht, dass bei Ofenbetrieb ein Warmluftstrom in gesondertem Luftkanal erzeugt wird, der der Abluft der Belüftungsanlage zugeführt wird und somit eine wesentlich höhere Temperatur der in den Luft/Luft-Wärmetauscher eingebrachten Abluft bewirkt. Da die erheblich wärmere Abluft im Luft/Luft-Wärmetauscher, der meist als Plattenwärmetauscher ausgebildet ist, zu einer deutlichen Anhebung der Temperatur des Zuluftstromes führt, wird eine Warmluftbeheizung aller über die Belüftungsanlage angeströmten Räume des Gebäudes erreicht. Es kann somit mit dieser Beheizungsanordnung die am Verbrennungsofen durch die Verbrennung entstehende Wärme gleichmäßig auf das gesamte Gebäude verteilt werden.

Dadurch, dass der Volumenstrom der vom Verbrennungsofen erwärmten Luft und/oder die Abluft und/oder die Frischluft und/oder die Zuluft gesteuert oder in Abhängigkeit von gemessenen Temperaturen und voreingestellten Wunschtemperaturen geregelt wird, kann die zusätzlich von dem Verbrennungsofen in dem Belüftungssystem eingespeiste Wärmemenge in Abhängigkeit von gemessenen Temperaturen geregelt werden. Mit einer Steuerung des Volumenstroms in der Luftführung kann somit in effektiver Weise die zur Verfügung stehende Wärmeenergie für die gesamte Beheizung des Hauses ausgenutzt werden. Durch geeignete Steuerverfahren können auch Temperaturabsenkungen für die Nacht und/oder Außentemperatur geführte Systeme verwirklicht werden.

Wenn der Verbrennungsofen ein raumluftunabhängiger, Holz gefeuerter Speicherofen mit Verbrennungsluftzufuhrkanal und Abgasführung ist, kann der Holz gefeuerte Speicherofen beispielsweise im Wohnraum eine behagliche Wärme, insbesondere durch Strahlungswärmeabgabe erzeugen und gleichwohl über den gesonderten Luftkanal ausreichend Warmluft an die Belüftungsanlage abgeben und somit im Wärmetauscher (Plattentauscher) erwärmte Zuluft in dem gesamten Gebäude verteilen. Für Niedrigenergiehäuser ergibt sich somit eine kostengünstige Beheizungsmöglichkeit, da ggf. vollständig auf eine Installation einer Zentralheizungsanlage verzichtet werden kann. Alternativ kann die Beheizungsanordnung als Zusatzheizung angesehen werden, die die Zentralheizung teils ersetzt und/oder ergänzt.

Bevorzugt weist der Speicherofen einen Verbrennungsraum und Nachheizregister, bevorzugt in modulartigem Aufbau, auf und der gesonderte Luftkanal ist um den Verbrennungsraum und das/die Nachheizregister herumgeführt. Damit wird eine möglichst effektive Wärmeausnutzung der Verbrennungsgase erreicht. In den Nachheizregistern übertragen die Heizgase ihre Wärme auf diese Register und geben sie teils als Strahlungswärme in den Aufstellungsraum des Speicherofens und teils an die im gesonderten Luftkanal vorbeiströmende Luft ab.

Wenn Volumenstromsteuerungsmittel im gesonderten Luftkanal und/oder in den Abluft- und/oder in den Zuluftkanälen und/oder in dem Verbrennungsluftzufuhrkanal angeordnet sind, kann der Wärmeeintrag zur Belüftungsanlage und damit zur allgemeinen Warmluftbeheizung des Wohngebäudes gesteuert werden. Die Volumenstromsteuerungsmittel sind in der einfachsten Ausführung manuell zu betätigende Drosselklappen, die an geeigneten Stellen der jeweiligen Luftführungskanäle zur manuellen Einstellung angeordnet sind.

In bevorzugter Ausgestaltung ist eine Regeleinheit mit Wirkverbindungen zu der/den Volumenstromsteuerungsmittel vorgesehen, die das/die Volumenstromsteuerungsmittel entsprechend vorgegebener und/oder gemessener Randbedingungen steuert, womit die Volumenstromsteuerungsmittel entsprechend einer in der Regeleinheit festgelegten Steuerung ferngesteuert in ihre jeweilige optimale Stellung gebracht werden. Dabei können die Volumensteuerungsmittel motorbetriebene Drosselklappen oder ähnliches sein. In der Regeleinheit kann ein Steuerungsprogramm hinterlegt sein, das beispielsweise auch unterschiedliche Heizkurven je nach Tageszeit, Wochentag oder dergleichen verwendet.

In weiterer Ausgestaltung sind Temperatursensoren im Verbrennungsraum und/oder im Nachheizregister und/oder im gesonderten Luftkanal und/oder in den Räumen und/oder in den Abluft- und/oder in den Zuluftkanälen und/oder in der Abgasführung mit Wirkverbindungen zur Regeleinheit angeordnet. Damit kann eine präzise Rückwirkung der jeweiligen Einstellung der Volumenstromsteuerungsmittel auf die Wärmeverteilung gemessen und entsprechend in der Regeleinheit nachgeregelt werden.

Als weitere Regelgröße ist die momentane Außentemperatur von Interesse, so dass an der Beheizungsanordnung im Außenbereich ein Außentemperatursensor mit Wirkverbindung zur Regeleinheit zur Messung der Temperatur der Frischluft vorgesehen ist.

Um festzustellen, ob der Verbrennungsofen überhaupt momentan in Betrieb ist, ist ein Betriebssensor mit Wirkverbindung zur Regeleinheit im Verbrennungsofen vorgesehen.

Wenn der Verbrennungsofen eine Ofentür hat und der Betriebssensor ein an der Ofentür angeordneter Ofentürendschalter ist, übermittelt der Betriebssensor gleichzeitig, dass weiteres Brennmaterial in dem Ofen eingelegt worden ist. Der Ofentürendschalter wird nämlich aktiviert, sobald eine Bedienperson die Ofentür soweit öffnet, wie es für das Nachlegen eines Holzscheites erforderlich ist. Entsprechend kann darauf hin von der Regeleinheit über die Wirkverbindungen das Volumenstromsteuerungsmittel im Verbrennungsluftzufuhrkanal vollständig geöffnet werden, um ein optimales Anbrennen, nachfolgende Pyrolyse und Verbrennung im Brennraum des Verbrennungsofens zu unterstützen. Sobald dann die von einem Temperatursensor in der Abgasführung gemessene Temperatur einen vorgegebenen Schwellwert unterschreitet, wird das Volumensteuerungsmittel im Verbrennungsluftzufuhrkanal gedrosselt, um eine zu starke Auskühlung des Brennraumes zu vermeiden. Während dieser gesamten Zeit kann über den gesonderten Luftkanal vom Verbrennungsofen übertragene Wärme zur Beheizung des gesamten Gebäudes der Belüftungsanlage zugeführt werden.

In einer ergänzenden Ausgestaltung ist ein Luft/Wasser-Wärmetauscher in dem Warmluftkanal des Ofens zur Belüftungsanlage vorgesehen, der Wärme der darin entlangströmenden Heizluft auf ein Wasserzirkulationssystem überträgt. Somit können über das Wasserzirkulationssystem entsprechend Wasser gebundene Wärmeverteilungssysteme, wie Zentralheizungen, Brauchwassererwärmung von der Beheizungsanordnung über die Warmluftzufuhr vom Verbrennungsofen in das gesamte System eingebunden werden.

Besonders bevorzugt weist das Wasserzirkulationssystem einen Puffer- und/oder Brauchwasserspeicher auf. Der Puffer- und/oder Brauchwasserspeicher kann beispielsweise überschüssige Wärme aus der Belüftungsanlage aufnehmen, zwischenspeichern und beispielsweise für die Warmwasserversorgung oder die Unterstützung einer Zentralheizung nutzen.

Selbstverständlich können auch weitere Systeme, wie Solarwärme oder Erdwärme mit der vorgenannten Beheizungsanordnung kombiniert werden.

Nachfolgend werden zwei Ausführungsbeispiele anhand der beiliegenden Prinzipskizzen detailliert beschrieben.

Darin zeigt:
- Fig. 1: eine Beheizungsanordnung in einem ersten Ausführungsbeispiel und
- Fig. 2: eine Beheizungsanordnung in einem zweiten Ausführungsbeispiel.

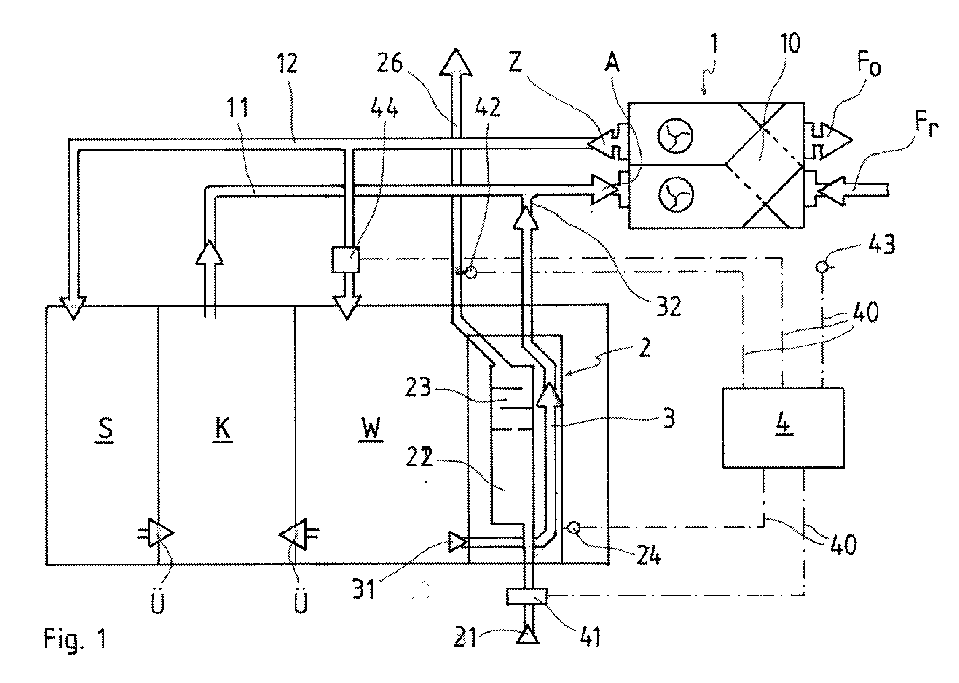

In Fig. 1 ist schematisch ein erstes Ausführungsbeispiel einer Beheizungsanordnung mit einer kontrollierten Belüftungsanlage 1 und einem Verbrennungsofen 2 dargestellt. Die Belüftungsanlage 1 ist mit einer Wärmerückgewinnung ausgestaltet, d. h. die Belüftungsanlage 1 weist einen Luft/Luft-Wärmetauscher 10 auf, in dem die Wärme der aus der Wohnung abgeführten Luft (Abluft A) zum überwiegenden Teil auf die einströmende Frischluft Fr als Zuluft Z übertragen wird. Dieser Luft/Luft-Wärmetauscher 10 ist als Plattentauscher ausgebildet, in dem die beiden Luftströme durch dünne Aluminiumplatten voneinander getrennt sind. Über diese Platten, an denen die Luft vorbeiströmt, wird die Wärme aus der Abluft A auf die Zuluft Z übertragen. Stromabwärtig der Abluft A hinter dem Luft/Luft-Wärmetauscher 10 wird die abgekühlte Abluft Fortluft Fo genannt. Die Fortluft Fo wird an die Umgebung abgegeben.

Die stromaufwärtig vom Luft/Luft-Wärmetauscher 10 von außen zugeführte Frischluft Fr führt im Gegenstrom durch den Wärmetauscher 10 unter Wärmeaufnahme in das Gebäude als Zuluft Z. Der Wirkungsgrad derartiger Plattentauscher beträgt mindestens 85 %.

Die gewünschte Luftströmungsrichtung im Gegenstrom durch die Belüftungsanlage 1 wird durch je einen Ventilator 14 im Zuluftkanal und Abluftkanal erreicht. Der Zuluftkanal 12 führt in Räume, die dem Wohnen und Schlafen dienen. In Fig. 1 ist schematisch ein Schlafraum S und ein Wohnraum W dargestellt. Durch entsprechende Vorkehrungen wird ein Überströmen (Pfeil Ü) der Luft in Räume mit höherem Feuchtigkeitsanfall und/oder Geruchsbelästigungen, wie Küche K oder Bäder ermöglicht. Dort befinden sich die Ansaugstellen für den Abluftkanal 11.

Der Verbrennungsofen 2 ist als Holz gefeuerter Speicherofen ausgebildet. Der Speicherofen 2 ist raumluftunabhängig ausgebildet und weist einen Verbrennungsluftzufuhrkanal 21 auf, der Verbrennungsluft von außen anzieht. In dem Verbrennungsluftzufuhrkanal 21 ist ein Volumenstromsteuerungsmittel 41, beispielsweise eine Drosselklappe vorgesehen. Der Speicherofen 2 weist einen Verbrennungsraum 22, in dem der Verbrennungsluftzufuhrkanal 21 mündet, und dem Verbrennungsraum 22 nachgeschaltet ein Nachheizregister 23 auf. Stromabwärtig des Nachheizregisters 23 werden die Verbrennungsgase in einer Abgasführung 26 in den Schornstein und somit nach außen geführt. Ferner ist in der Abgasführung 26 ein Temperatursensor 42 angeordnet.

Der Speicherofen 2 ist insbesondere als Grundofen mit Aufbausystem gemäß EP 1 431 666 B1 ausgebildet. Zur Beschickung des Verbrennungsraums 22 ist eine selbsttätige und dicht schließende Ofentür 25 vorgesehen. An der Ofentür 25 ist ein Betriebssensor 24 in Form eines Ofentürendschalters angeordnet.

Ferner ist am Verbrennungsofen 2 ein gesonderter Luftkanal 3 so angeordnet, dass der Luftkanal in Wärme aufnehmenden Kontakt mit dem Verbrennungsraum 22 und dem Nachheizregister 23 um diese Bauteile herum geführt ist. Der gesonderte Luftkanal 3 weist ein stromaufwärtiges Ende 31 auf, das offen in den Wohnraum, in dem der Verbrennungsofen 2 aufgestellt ist, zeigt und somit eine Lufteintrittsöffnung bildet. Das stromabwärtige Ende 32 des gesonderten Luftkanals 3 ist an einem Abluftkanal 11 der Belüftungsanlage 1 angeschlossen.

Ferner ist in Fig. 1 eine Regeleinheit 4 dargestellt, die Wirkverbindungen 40 zum Ofentürendschalter 24, Volumenstromsteuerungsmittel 41 und Temperatursensor 42 hat.

Nachfolgend wird die Wirkungsweise der Beheizungsanordnung beschrieben.

Bei Betrieb des Speicherofens 2 wird über den Betriebssensor/Ofentürendschalter 24 der Regeleinheit 4 das Auflegen eines Holzscheites signalisiert, womit das Volumenstromsteuerungsmittel 41 im Verbrennungsluftzufuhrkanal 21 vollständig geöffnet wird, um einen optimalen Anbrand und Verbrennung des Holzes zu gewährleisten. Die während des Verbrennungsprozesses erzeugte Wärme wird zum einen Teil in den Wohnraum W, insbesondere über Strahlungswärme abgegeben. Zum anderen Teil wird die beim Verbrennungsprozess entstehende Wärme durch Wärmeleitung in den gesonderten Luftkanal 3 sowie die darin geführte Luft übertragen.

Durch Konvektion und die schwache Ansaugung durch die Belüftungsanlage 1 über die Verbindung des gesonderten Luftkanals 3 mit dem Abluftkanal 11 entsteht eine Luftströmung durch den gesonderten Luftkanal 3, wobei die Warmluft die Abluft A im Abluftkanal 11 erwärmt. Entsprechend erfolgt ein höherer Wärmeeintrag zum Luft/Luft-Wärmetauscher 10 der Belüftungsanlage 1. Im Plattenwärmetauscher wird die Wärme der Abluft zum größten Teil auf die angesogene Frischluft Fr als Zuluft Z übertragen. Die über die Warmluft des Ofens zusätzlich erwärmte Zuluft Z wird dann in üblicher Weise auf Wohnraum W und Schlafraum S bzw. weitere Wohnräume/Kinderzimmer verteilt, wobei bei Ofenbetrieb ein Volumenstromsteuerungsmittel 44 mit Wirkverbindung 40 zur Regeleinheit 4 die Warmluftzufuhr zum Wohnraum drosselt, um eine Überheizung zu vermeiden, weil dem Wohnraum bereits direkt Strahlungswärme durch den dort aufgestellten Ofen zugeführt wird. Somit wird mit der erfindungsgemäßen Beheizungsanordnung über die Belüftungsanlage eine Warmluftheizung für das gesamte Gebäude bereit gestellt.

Sobald die in der Abgasführung 26 über Temperatursensor 42 gemessene Abgastemperatur unter einen Schwellwert sinkt, wird über Wirkverbindung 40 und Regeleinheit 4 das Volumenstromsteuerungsmittel 41 in dem Verbrennungsluftzufuhrkanal 21 gedrosselt, um eine übermäßige Abkühlung des Brennraums 22 zu vermeiden. Die Drosselung der Verbrennungsluftzufuhr kann kontinuierlich mit der gemessenen Temperatur oder stufenweise erfolgen. Zum Schluss der Verbrennung wird die Verbrennungsluftzufuhr vollständig geschlossen. Optional kann die durch den gesonderten Luftkanal 3 geführte Luftströmung ebenfalls mit einem Volumenstromsteuerungsmittel, beispielsweise bei Unterschreiten eines weiteren Temperaturschwellwertes, entweder gemessen in der Abgasführung oder im gesonderten Luftkanal, gedrosselt werden. Diese Option ist in Fig. 1 nicht dargestellt.

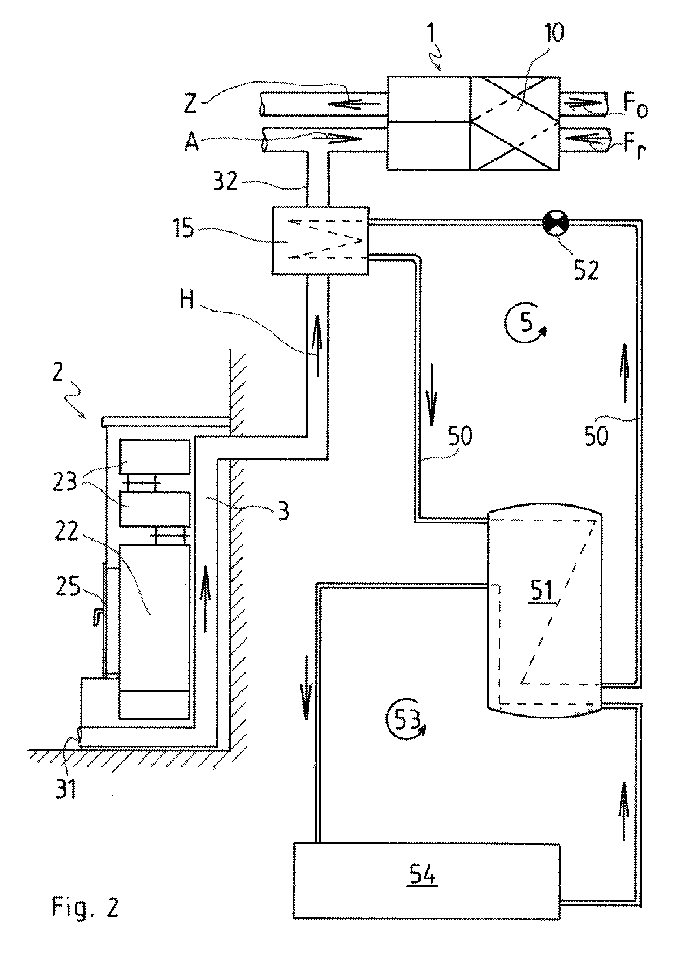

In Fig. 2 ist ein zweites Ausführungsbeispiel der erfindungsgemäßen Beheizungsanordnung schematisch dargestellt. Funktionsgleiche Bauteile sind mit gleichen Bezugszeichen versehen.

In Fig. 2 ist die Belüftungsanlage 1 lediglich in Form des Gerätes ohne die Luftverteilung in die einzelnen Räume dargestellt. Dieses Grundprinzip ist wie bei allen kontrollierten Belüftungsanlagen ausgeführt und entspricht der Anordnung gemäß Fig. 1.

Im Ausführungsbeispiel gemäß Fig. 2 ist ebenfalls ein Verbrennungsofen 2 in einem Wohnraum W angeordnet. Der Verbrennungsofen 2 weist als Speicherofen einen Verbrennungsraum 22 und im dargestellten Ausführungsbeispiel zwei Nachheizregister 23 auf. Der Verbrennungsraum 22 ist mit einer selbst- und dichtschließenden Ofentür 25 versehen. In Fig. 2 ist der Verbrennungsluftzufuhrkanal und die Abgasführung nicht dargestellt, diese ist jedoch ebenso wie in Fig. 1 ausgebildet.

Um den Verbrennungsraum 22 und die beiden Nachheizregister 23 herum ist der gesonderte Luftkanal 3 in Wärme aufnehmenden Kontakt angeordnet. Das stromaufwärtige Ende 31 ist als Lufteintritt unterhalb des Ofens angeordnet. Hier wird Raumluft aus dem Wohnraum W angesogen und entlang des gesonderten Luftkanals 3 unter Erwärmung in Pfeilrichtung H als Heizluft zum stromabwärtigen Ende 32 des gesonderten Luftkanals 3 geführt und dort in einen Abluftkanal 11 der Belüftungsanlage 1 geleitet. Entsprechend wird die Heizluft H mit der übrigen Abluft A des Gebäudes vermischt und über einen Wärmetauscher 15 geführt.

Im Gegensatz zu der Ausgestaltung gemäß Fig. 1 ist im Warmluftkanal 3 vom Ofen zur Belüftungsanlage 1 ein Luft/Wasser-Wärmetauscher 15 vorgesehen, der durch die im Warmluftkanal geführten Heizluft H vor dem Wärmeaustausch zwischen der warmen Abluft A und der Zuluft Z ein Wasserzirkulationssystem 5 erwärmt. Das Wasserzirkulationssystem 5 nimmt in dem Luft/Wasser-Wärmetauscher 15 Wärme aus der Heizluft H auf, wobei das erwärmte Wasser im Wasserzirkulationssystem 5 über eine Zirkulationsleitung 50 einem Puffer- und/oder Brauchwasserspeicher 51 zugeführt wird. Ferner ist in der Zirkulationsleitung 50 eine bevorzugt elektronisch geregelte Pumpe 52 vorgesehen, die bei Bedarf und geeigneten Temperaturrandbedingungen angesteuert wird. An den Puffer- und/oder Brauchwasserspeicher kann dann beispielsweise ein Heizkreislauf 53, insbesondere für Flächenheizungen 54, Fußboden- und/oder Wandheizungen angeschlossen sein. Alternativ oder ergänzend kann auch eine Brauchwasserversorgung realisiert werden.

### Bezugszeichenliste

- 1: Belüftungsanlage
- 10: Luft/Luft-Wärmetauscher
- 11: Abluftkanal
- 12: Zuluftkanal
- 13: Luft/Wasser-Wärmetauscher
- 14: Ventilator
- 15: Luft/Wasser-Wärmetauscher

- 2: Verbrennungsofen, Speicherofen
- 21: Verbrennungsluftzufuhrkanal
- 22: Verbrennungsraum
- 23: Nachheizregister
- 24: Betriebssensor
- 25: Ofentür
- 26: Abgasführung

- 3: gesonderter Luftkanal, Warmluftkanal
- 31: stromaufwärtiges Ende, Lufteintritt
- 32: stromabwärtiges Ende

- 4: Regeleinheit
- 40: Wirkverbindung
- 41: Volumenstromsteuerungsmittel
- 42: Temperatursensor
- 43: Außentemperatursensor
- 44: Volumenstromsteuerungsmittel

- 5: Wasserzirkulationssystem
- 50: Zirkulationsleitung
- 51: Puffer- und/oder Brauchwasserspeicher
- 52: Pumpe
- 53: Heizkreislauf
- 54: Flächenheizung

- A: Abluft
- Fo: Fortluft
- Fr: Frischluft
- H: Heizluft
- K: Küche, Bad
- S: Schlafraum
- Ü: Überströmen
- W: Wohnraum
- Z: Zuluft

## Patentansprüche

1. Verfahren zur Beheizung, insbesondere für Wohnräume (W, S, K), mit kontrollierter Belüftung mit Wärmerückgewinnung, wobei Abluft (A) aus den Wohnräumen (W, S, K) einen Teil ihrer Wärme an im Gegenstrom zufließender Frischluft (Fr) abgibt und diese erwärmte Frischluft als Zuluft (Z) in die Wohnräume (W, S, K) führt, und
einem Verbrennungsofen (2), **dadurch gekennzeichnet, dass** am Verbrennungsofen (2) im wärmeaufnehmenden Kontakt entlanggeführte Luft so geführt wird, dass sie der Abluft (A) der kontrollierten Wohnraumbelüftung zugeschlagen wird und somit die in der vom Verbrennungsofen (2) erwärmten Luft aufgenommene Wärme auf die im Gegenstrom zufließende Frischluft (Fr) als stärker erwärmte Zuluft (Z) übertragen wird.

2. Verfahren nach Anspruch 1, **dadurch gekennzeichnet, dass** der Volumenstrom der vom Verbrennungsofen (2) erwärmten Luft und/oder die Abluft (A) und/oder die Frischluft (Fr) und/oder die Zuluft (Z) gesteuert oder in Abhängigkeit von gemessenen Temperaturen und voreingestellten Wunschtemperaturen geregelt wird.

3. Beheizungsanordnung, insbesondere für Wohnräume (W, S, K),
- mit kontrollierter Belüftungsanlage (1) mit Wärmerückgewinnung, bei der Abluftkanäle (11) Abluft (A) aus den Räumen (K) über einen Luft/Luft-Wärmetauscher (10) als Fortluft (Fo) nach außen abgeben und im Gegenstrom Frischluft (Fr) über den Luft/Luft-Wärmetauscher (10) als von der Wärme der Abluft (A) erwärmte Zuluft (Z) über Zuluftkanäle (12) in die Räume (R) führt, und
- mit Verbrennungsofen (2), insbesondere für Festbrennstoffe,
**dadurch gekennzeichnet, dass** ein gesonderter Luftkanal (3) in Wärme aufnehmendem Kontakt am Verbrennungsofen (2) vorgesehen ist, dessen stromabwärtiges Ende (32) an einem Abluftkanal (11) der Belüftungsanlage (1) angeschlossen ist und dessen stromaufwärtiges Ende (31) zum Raum (R) offen ist.

4. Beheizungsanordnung nach Anspruch 3, **dadurch gekennzeichnet, dass** der Verbrennungsofen (2) ein raumluftunabhängiger, Holz gefeuerter Speicherofen mit Verbrennungsluftzufuhrkanal (21) und Abgasführung (26) ist.

5. Beheizungsanordnung nach Anspruch 4, **dadurch gekennzeichnet, dass** der Speicherofen (2) einen Verbrennungsraum (22) und Nachheizregister (23), bevorzugt in modulartigem Aufbau, aufweist und der gesonderte Luftkanal (3) um den Verbrennungsraum (22) und das/die Nachheizregister (23) herumgeführt ist.

6. Beheizungsanordnung nach Anspruch 3, 4 oder 5, **dadurch gekennzeichnet, dass** Volumenstromsteuerungsmittel (41, 44) im gesonderten Luftkanal (3) und/oder in den Abluft- (11) und/oder in den Zuluftkanälen (12) und/oder in dem Verbrennungsluftzufuhrkanal (23) angeordnet sind.

7. Beheizungsanordnung nach Anspruch 6, **dadurch gekennzeichnet, dass** eine Regeleinheit (4) mit Wirkverbindungen (40) zu der/den Volumenstromsteuerungsmittel (41, 44) vorgesehen ist, die das/die Volumenstromsteuerungsmittel (41, 44) entsprechend vorgegebener und/oder gemessener Randbedingungen steuert.

8. Beheizungsanordnung nach Anspruch 7, **dadurch gekennzeichnet, dass** Temperatursensoren (42) im Verbrennungsraum (22) und/oder im Nachheizregister (23) und/oder im gesonderten Luftkanal (3) und/oder in den Räumen und/oder in den Abluft- (11) und/oder in den Zuluftkanälen (12) und/oder in der Abgasführung (26) mit Wirkverbindungen (40) zur Regeleinheit (4) angeordnet sind.

9. Beheizungsanordnung nach Anspruch 7 oder 8, **dadurch gekennzeichnet, dass** im Außenbereich ein Außentemperatursensor (43) mit Wirkverbindung (40) zur Regeleinheit (4) zur Messung der Temperatur der Frischluft (Fr) vorgesehen ist.

10. Beheizungsanordnung nach Anspruch 7, 8 oder 9, **dadurch gekennzeichnet, dass** ein Betriebssensor (24) mit Wirkverbindung (40) zur Regeleinheit (4) im Verbrennungsofen (2) vorgesehen ist.

11. Beheizungsanordnung nach Anspruch 10, **dadurch gekennzeichnet, dass** der Verbrennungsofen (2) eine Ofentür (25) hat und der Betriebssensor (24) ein an der Ofentür (25) angeordneter Ofentürendschalter ist.

12. Beheizungsanordnung nach einem der vorangehenden Ansprüche, **dadurch gekennzeichnet, dass** ein Luft/Wasser-Wärmetauscher (15) im gesonderten Luftkanal (3) oder im mit der Heizluft beaufschlagten Abluftkanal (11) in Strömungsrichtung vor der Belüftungsanlage (1) vorgesehen ist, der Wärme des Heizluft- (H) oder Abluftstroms (A) auf ein Wasserzirkulationssystem (5) überträgt.

13. Beheizungsanordnung nach Anspruch 12, **dadurch gekennzeichnet, dass** das Wasserzirkulationssystem (5) einen Puffer- und/oder Brauchwasserspeicher (51) aufweist.
